# EUROPEAN PATENT SPECIFICATION

(11) **EP 4 546 066 B1**
(45) Date of publication and mention of the grant of the patent: **12.08.2026**
(21) Application number: 23857656.5
(22) Date of filing: 18.08.2023
(51) Int. Cl.: G05B 19/418, H01M 10/04, G06V 10/762, G06F 18/2411, G06K 19/06, G06T 7/70, G06T 1/00, G06V 10/74

(54) **CELL ID RESTORATION METHOD AND MANUFACTURING PROCESS SYSTEM USING SAME**
VERFAHREN ZUR WIEDERHERSTELLUNG EINER ZELLEN-ID UND HERSTELLUNGSPROZESSSYSTEM DAMIT
PROCÉDÉ DE RESTAURATION D'ID DE CELLULE ET SYSTÈME DE PROCESSUS DE FABRICATION L'UTILISANT

(30) Priority: 23.08.2022 KR 20220105227
(43) Date of publication of application: 30.04.2025
(73) Proprietor: LG Energy Solution, Ltd., Seoul 07335 (KR)
(72) Inventor: JEONG, Sukjin, Daejeon 34122 (KR); BOO, Janghun, Daejeon 34122 (KR); JUNG, Tae Kwang, Daejeon 34122 (KR); PARK, Dong Wook, Daejeon 34122 (KR); KIM, Min Su, Daejeon 34122 (KR); KIM, Junbeom, Daejeon 34122 (KR); PARK, Yeongheon, Daejeon 34122 (KR); LEE, Sung Gyu, Daejeon 34122 (KR); LEE, Seunghyung, Daejeon 34122 (KR); LEE, Yoonseob, Daejeon 34122 (KR)
(74) Representative: BCKIP Part mbB
(86) International application number: PCT/KR2023/012260
(87) International publication number: WO 2024/043622

(56) References cited:
- CN-A- 110 909 559
- JP-A- 2013 030 376
- KR-A- 20090 092 372
- KR-A- 20150 001 192
- KR-B1- 101 398 215
- KR-B1- 102 289 155
- US-A1- 2020 074 131
- US-B1- 9 104 935

## Description

### [Technical Field]

The present invention relates to a cell ID recovery method and a manufacturing process system using the same.

### [Background Art]

During a battery pack manufacturing process, there are cases where tracking of a battery cell fails. The tracking of the battery cell during the manufacturing process may be performed using a cell ID written at a specific location on the battery cell and means for capturing and recognizing the cell ID. The cell ID may be an image having a specific pattern, such as a barcode. When the recognition means fails to recognize a cell ID image during the manufacturing process, the tracking of the battery cell corresponding to the cell ID may fail.

When a quality problem occurs with a battery pack, it is necessary to determine which unit manufacturing process during the manufacturing process causes the quality problem. When the tracking of the battery cell fails during the manufacturing process of the battery pack in which a quality problem occurred, the unit manufacturing process that caused the quality problem may not be determined. Then, an experienced engineer should manually collect, process, and connect all production history for each manufacturing process unit. The work requires a significant amount of time from an experienced engineer.

Because there are limits to the accuracy of manual work, all battery cells produced over a certain period of time should be discarded based on the time when the quality problem occurs in the unit manufacturing process. This increases battery cell disposal costs.

CN 110909559 A discloses a lithium battery bar code recognition system and method based on image processing. The recognition system comprises an industrial personal computer, an image acquisition card, and a high-speed camera. The high-speed camera is composed of an industrial camera and a light source. The recognition method comprises image acquisition, image processing, bar code positioning and barcode storage.

### [Invention]

### [Technical Problem]

As such, the failure to track the battery cell during the manufacturing process may cause problems that require significant time and costs. The present invention attempts to provide a cell ID recovery method capable of preventing battery cell tracking failure and a manufacturing process system using the same.

### [Technical Solution]

To solve the above problems, the present invention provides a manufacturing process system in accordance with claim 1, and a cell ID recovery method in accordance with claim 11.

When the cell ID recovery for the first unrecognized cell ID image fails, the cell ID recovery unit may perform rereading on the first unrecognized cell ID image.

The EDC server may perform cell ID recovery on the plurality of unrecognized cell ID images according to predetermined rule according to a method of assigning the cell ID, and the first unrecognized cell ID image may be an unrecognized cell ID image that fails to be recovered by the EDC server.

Among the plurality of electronic control devices, a first electronic control device that controls a first unit manufacturing process in which the first unrecognized cell ID image occurs derives a first cell ID location of the first unrecognized cell ID image, and determines a predetermined number of candidate cell IDs based on the first cell ID location, and the candidate cell ID images may be cell ID images recognized in a second unit manufacturing process before the first unit manufacturing process corresponding to the candidate cell IDs.

The cell ID recovery unit calculates a similarity between the candidate cell ID images and the first unrecognized cell ID image to derive a candidate cell ID image most similar to the first unrecognized cell ID image among the candidate cell ID images, and determines the cell ID corresponding to the derived candidate cell ID image as the cell ID for the first unrecognized cell ID image.

The cell ID recovery unit may learn a method of calculating the similarity between the plurality of unrecognized cell ID images and a plurality of normal cell ID images through deep learning.

The plurality of unrecognized cell ID images for learning by the cell ID recovery unit may be clustered according to a cause of non-recognition.

The manufacturing process system may further include: a clustering device that classifies the plurality of unrecognized cell ID images and performs learning to determine a cluster to which each unrecognized cell ID image corresponds among the plurality of clusters.

Among the plurality of electronic control devices, the first electronic control device that controls the first unit manufacturing process may include: a barcode reader that reads the plurality of cell IDs that have undergone the first unit manufacturing process; and a first client that transmits a cell ID normally recognized by the barcode reader and an unrecognized cell ID image to the EDC server.

When the first unrecognized cell ID image occurs in the first unit manufacturing process, the first client may derive a first cell ID location of the first unrecognized cell ID image, and determine a predetermined number of candidate cell IDs based on the first cell ID location.

Among the plurality of electronic control devices, a second electronic control device that controls a second unit manufacturing process before the first unit manufacturing process is provided. The second electronic control device may include a second client that determines cell ID images corresponding to the candidate cell IDs among the plurality of cell IDs recognized in the second unit manufacturing process as the candidate cell ID images.

The cell ID recovery unit is provided in the second electronic control device.

When the first unrecognized cell ID occurs during a lamination process among the plurality of unit manufacturing processes, the cell ID recovery unit may recover the candidate cell ID image most similar to the first unrecognized cell ID image to the cell ID for the first unrecognized cell ID image, among the candidate cell ID images recognized in a notching process, which is a step before the lamination process.

When the cell ID recovery for the first unrecognized cell ID image fails, the cell ID recovery unit may perform rereading on the first unrecognized cell ID image.

The cell ID recovery method may further include: transmitting, by the first electronic control device, a plurality of unrecognized cell ID images, which fail to be recognized, to an EDC server; performing, by the EDC server, cell ID recovery on the plurality of unrecognized cell ID images according to a predetermined rule; and deriving, by the EDC server, a first unrecognized cell ID image that is not be recovered according to a result of performing the recovery.

The step of determining, by the first electronic control device, the candidate cell ID may include determining a predetermined number of cell IDs in a front location and cell IDs in a back location as candidate cell IDs based on the unrecognized cell ID location.

The cell ID recovery method may further include: recovering, by the second electronic control device, a cell ID corresponding to the derived candidate cell ID image to a cell ID for the first unrecognized cell ID image; and transmitting the recovered cell ID to the first electronic control device.

The first unit manufacturing process may be a lamination process, and the second unit manufacturing process is a notching process.

The cell ID recovery method may further include: when the cell ID recovery for the first unrecognized cell ID image fails, performing rereading on the first unrecognized cell ID image.

### [Advantageous Effects]

The present invention provides a cell ID recovery method capable of preventing battery cell tracking failure and a manufacturing process system using the same.

### [Description of the Drawings]

FIG. 1 is a diagram schematically illustrating a manufacturing process system according to an embodiment.
FIG. 2 is a diagram schematically illustrating a battery pack manufacturing process according to an embodiment.
FIGS. 3 and 4 are flowcharts illustrating a cell ID recovery method according to an embodiment.

### [Detailed Description of Exemplary Embodiments]

Hereafter, embodiments of the present invention will be described in detail with reference to the accompanying drawings and the same or similar components are given the same reference numerals and are not repeatedly described. The suffix "module" and/or "unit" for components used in the following description is given or mixed in consideration of only the ease of writing of the specification, and therefore, do not have meanings or roles that distinguish from each other in themselves. Further, when it is decided that a detailed description for the known art related to the present invention may obscure the gist of the present invention, the detailed description will be omitted. Further, it should be understood that the accompanying drawings are provided only in order to allow exemplary embodiments of the present invention to be easily understood, the scope of the invention is defined by the appended claims.

Terms including an ordinal number such as first, second, etc., may be used to describe various components, but the components are not limited to these terms. The above terms are used solely for the purpose of distinguishing one component from another.

Further, in the present specification, it is to be understood that when one component is referred to as being "connected to" or "coupled to" another component, it may be connected or coupled directly to another component or be connected to another component with the other component interposed therebetween. On the other hand, it should be understood that when one element is referred to as being "connected directly to" or "coupled directly to" another element, it may be connected to or coupled to another element without the other element interposed therebetween.

It will be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

Hereinafter, in this specification, a "cell" may refer to one of an anode and a cathode constituting a battery cell, the battery cell, and one of stacked battery cells in which a predetermined number of battery cells are stacked.

A cell tracking method according to an embodiment may include a step of recovering a cell ID when an event in which cell ID recognition fails occurs in a plurality of unit manufacturing processes that constitute an assembly process such as a notching process, a lamination process, a stacking process, a folding process, and a packaging process. In this specification, embodiments of a method of recovering a cell ID and a manufacturing process system using the same are described.

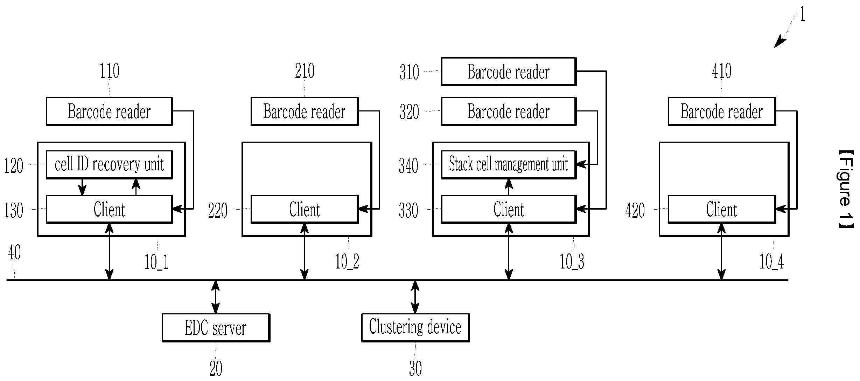

FIG. 1 is a diagram schematically illustrating a manufacturing process system according to an embodiment.

A manufacturing process system 1 illustrated in FIG. 1 may control the notching process, the lamination process, the stacking process, and the packaging process. A cell tracking method according to an embodiment may be applied to the manufacturing process system 1. The manufacturing process system 1 tracks a manufacturing process history for a cell based on the cell ID recognized in each unit manufacturing process. The manufacturing process system 1 may recognize a cell ID of a cell that has passed each unit manufacturing process and know through which manufacturing process the corresponding cell is manufactured among a plurality of manufacturing processes.

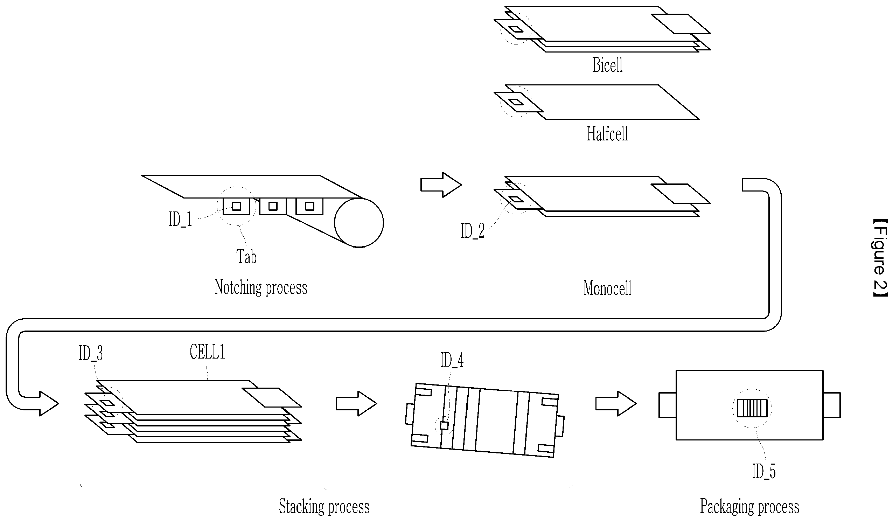

FIG. 2 is a diagram schematically illustrating a battery pack manufacturing process according to an embodiment.

FIG. 2 schematically illustrates each unit manufacturing process to aid understanding of battery cell tracking. Among the plurality of manufacturing processes illustrated in FIG. 2, some manufacturing processes may be omitted, and some manufacturing processes not illustrated in FIG. 2 may be added. For example, the folding process is not illustrated in FIG. 2, but the folding process may be added instead of the stacking process.

First, in the notching process, an anode member or a cathode member wound in a roll shape may be cut into an electrode shape suitable for a shape of a battery cell. Laser notching equipment or press notching equipment may be used to cut the electrodes from each member. As illustrated in FIG. 2, tabs connected to a non-coating part on which an anode active material is not applied are located in the anode member, and each tab may be marked with a cell ID (ID_1). The Cell ID ID_1 may be engraved on each tab using a laser. In FIG. 2, the cell ID ID_1 may be marked on an anode tab, but the invention is not limited thereto and the cell ID may be marked on the cathode tab.

Next, in the lamination process, the cathode and the anode and a separator attached therebetween are laminated. As illustrated in FIG. 2, a structure of the battery cell may be one of a monocell, a bicell, and a halfcell structures, and as illustrated in FIG. 2, the cell ID ID_2 is printed on the anode tab of the monocell, bicell, and halfcell . In FIG. 2, the cell ID is printed on the anode tab, but the present invention is not limited thereto, and the cell ID may be printed on the cathode tab. Cell ID ID_2 and cell ID ID_1 may be the same cell ID.

Next, in the stacking process, a predetermined number of battery cells are stacked in layers with the separator between layers. The stacked battery cell is manufactured by stacking a predetermined number of battery cells through the stacking process, and a cell ID ID_3 is printed on the anode tabs of each battery cell constituting each stacked battery cell. In the stacked battery cell, the battery cell whose cell ID is exposed to the outside as it is, for example, a battery cell CELL1 located on the top in FIG. 2 may represent the stacked battery cell. A stack virtual ID for the stacked battery cell may match the cell ID ID_3 of the battery cell CELL1. The Cell ID ID_2 and the cell ID ID_3 may be the same cell ID. Alternatively, the battery cell having the cell ID ID_2 may be included in the stacked battery cell represented by the cell ID ID_3.

A cell ID ID_4 corresponding to the stack virtual ID may be printed on a full-circumferential tape surrounding the outside of the battery pack manufactured through the stacking process. The cell ID ID_3 and cell ID ID_4 may be matched through the stack virtual ID. The cell ID ID_4 is illustrated as being printed on the full-circumferential tape, but the invention is not limited thereto. The cell ID ID_4 may be printed in a location that may be recognized from the outside of the stacked battery cell.

In the packing process, the battery pack is packaged so that the assembling step of the battery pack may be completed. A pack ID ID_5 matching the stack cell ID ID_4 may be printed on the outside of the packaged battery pack.

In this way, based on the cell ID recognized in each unit manufacturing process, the manufacturing process system 1 may track the manufacturing process history that the cell has undergone. Hereinafter, the location of the cell in the specification may be determined according to the order in which the manufacturing process is applied to an arbitrary cell when the unit manufacturing process is applied to each of the plurality of cells. For example, the faster the order in which the manufacturing process is applied, the earlier the location of the cell is. The location of the cell ID is determined according to the location of the cell. The earlier the location of the cell, the earlier the location of the corresponding cell ID image is.

The manufacturing process system 1 includes a plurality of electronic control devices 10_1 to 10_4 that control the plurality of unit manufacturing processes, an equipment data collection (EDC) server 20, and a clustering device 30.

The EDC server 20 may store data acquired during the manufacturing process. Necessary information may be transmitted and received between the plurality of electronic control devices 10_1 to 10_4 and the EDC server 20 through wired and wireless communication. In FIG. 1, a communication bus 15 is illustrated as being constructed between the plurality of electronic control devices 10_1 to 10_4 and the EDC server 20, but the communication method between components is not limited thereto.

Each of the plurality of electronic control devices 10_1 to 10_4 controls the corresponding unit manufacturing process and performs cell ID recognition to track each battery cell. The method by which each of the plurality of electronic control devices 10_1 to 10_4 controls the manufacturing process may be implemented through known technologies, and therefore, detailed description thereof will be omitted. This specification describes a cell tracking method.

Each of the plurality of electronic control devices 10_1 to 10_4 may match production facility number of a process line in which the unit manufacturing process is performed, LOT information of an object manufactured in the unit manufacturing process, and a cell ID reading time of the manufactured object to cell ID recognition images together. The cell ID reading time is the time when the cell ID is read by a barcode recognition unit of each unit manufacturing process, and the cell ID recognition image may be an image of the cell ID read by the barcode recognition unit. Each of the plurality of electronic control devices 10_1 to 10_4 may acquire whether the cell ID recognition fails and acquire information on the cell ID. The cell ID may be a cell ID read by the barcode recognition unit.

The EDC server 20 may form information received from the plurality of electronic control devices 10_1 to 10_4 into a database and store the information. For example, the EDC server 20 may classify the cell ID reading time, the cell ID recognition image, whether the cell ID recognition fails, the cell ID, the production facility number, and the LOT information according to predetermined criteria and form them into the database. In this case, the predetermined criteria may be the cell ID reading time.

In addition, when the EDC server 20 receives an unrecognized cell ID image from the electronic control devices 10_1 to 10_4 through the communication bus 40, the EDC server 20 may perform cell ID recovery for the unrecognized cell ID image according to a predetermined rule. For example, the predetermined rule is based on a method of assigning a cell ID, and when a plurality of cell IDs are assigned to have values that sequentially increase in predetermined units, the EDC server 20 may derive the cell ID corresponding to the unrecognized cell ID image based on the cell IDs of the cells located before and after the cell corresponding to the unrecognized cell ID image.

As illustrated in FIG. 1, the electronic control device 10_1 applied to the notching process includes a barcode reader 110, a cell ID recovery unit 120, and a client 130. In FIG. 1, the cell ID recovery unit 120 is illustrated as being provided in the electronic control device 10_1, but the present invention is not limited thereto. For example, the cell ID recovery unit 120 is a separate configuration and is provided outside the electronic control devices 10_1 to 10_4, or may be provided in any one of an electronic control device 10_2, an electronic control device 10_3, and an electronic control device 10_4.

The barcode reader 110 may generate the cell ID image by reading the cell ID ID_1 of the anode cut through the notching process and recognize the cell ID from the generated cell ID image. When the barcode reader 110 fails to recognize the cell ID from the generated cell ID image, the barcode reader 110 may regenerate the cell ID image. The barcode reader 110 may recognize the cell ID from the regenerated cell ID image. When the barcode reader 110 finally fails to recognize the cell ID, the electronic control device 10_1 may store the manufacturing process information corresponding to the cell in which the cell ID recognition failed, and transmit the stored manufacturing process information to the upper controller.

The client 130 may transmit the cell ID recognized by the barcode reader 110 and the unrecognized cell ID image to the EDC server 20. In this case, the unrecognized cell ID image may be one of the initially generated cell ID image, the regenerated cell ID image, or both images.

The cell ID recovery unit 120 may perform recovery on the unrecognized cell ID image that fails to be recovered in the EDC server 20. The cell ID recovery unit 120 may learn a method of recovering unrecognized cell ID images through deep learning and recover unrecognized cell ID images generated in each unit manufacturing process. The cell ID recovery unit 120 may train a method of recovering a plurality of unrecognized cell ID images through deep learning. The cell ID recovery unit 120 may use accumulated learning data including a plurality of unrecognized cell ID images and a plurality of normal cell ID images corresponding thereto in deep learning.

In addition, the cell ID recovery unit 120 restores the unrecognized cell ID using the cell ID images (hereinafter, candidate cell ID images) for a predetermined number of cells, based on the location of the cell corresponding to the unrecognized cell ID in the previous unit process of the unit manufacturing process where non-recognition occurred.

The cell ID recovery unit 120 calculates the similarity between the candidate cell ID images and the unrecognized cell ID images to derive the candidate cell ID image most similar to the unrecognized cell ID image among the entire candidate cell ID images. The cell ID recovery unit 120 determines the cell ID corresponding to the derived candidate cell ID image as the cell ID for the unrecognized cell ID image. The cell ID recovery unit 120 may transmit the recovered cell ID to the client 130, and the client 130 may transmit the cell ID to the EDC server 20 and the client of the electronic control device of other unit manufacturing processes where the unrecognized cell ID image occurred. The EDC server 20 may replace the unrecognized cell ID image with the received cell ID and store the received cell ID in the database.

The cell ID recovery unit 120 may fail to recover the first unrecognized cell ID image. For example, when the entire similarity between the entire candidate cell ID images and the first unrecognized cell ID image is less than a predetermined threshold, the cell ID recovery unit 120 may determine that recovery of the first unrecognized cell ID image fails. In this case, the cell ID recovery unit 120 may reread the first unrecognized cell ID image. For example, the cell ID recovery unit 120 may reread the first unrecognized cell ID image that fails to be recovered through a method of recovering an unrecognized cell ID image learned through deep learning. Through such TWO-TRACK recovery, it is possible to improve a read rate for the unrecognized cell ID images.

The cell ID recovery unit 120 can learn a method of calculating a similarity between a plurality of unrecognized cell ID images and normally recognized cell ID images (hereinafter referred to as normal cell ID images), which are candidate cell ID images, through the deep learning. The plurality of normal cell ID images and the plurality of unrecognized cell ID images may be used as learning data for the deep learning of the cell ID recovery unit 120. In this case, when the plurality of unrecognized cell ID images are clustered according to the cause of the non-recognition, learning accuracy may be improved. The unrecognized cell ID images used for learning by the cell ID recovery unit 120 according to one embodiment may be clustered.

To this end, the manufacturing process system 1 may include a separate component that clusters the unrecognized cell ID images. For example, the manufacturing process system 1 may further include a clustering device 30. The cell ID image has a certain size, but if the cell ID image is used as it is, an order of data is too large. Therefore, an order of the plurality of images may be lowered to two dimensions using t-distributed stochastic neighbor embedding (t-SNE). K-means clustering may be applied to two-dimensional images to cluster the two-dimensional images.

The clustering device 30 may classify the plurality of unrecognized cell ID images and perform learning to determine the cluster to which each unrecognized cell ID image corresponds among the plurality of clusters. The learning may be performed according to a deep learning technique, and the deep learning technique may be, for example, a convolution neural network (CNN) algorithm. The clustering device 30 may program and store a classification model that performs the CNN algorithm, and operate the program to perform learning to classify the unrecognized cell ID image into one of the plurality of clusters. According to the CNN algorithm, the clustering device 30 performs feature extraction on the unrecognized cell ID image as input data through a convolution layer, a ReLU layer, and a pooling layer, and inputs the extracted features to a flatten layer. The clustering device 30 includes a classifier that uses features corresponding to the flatten layer as the input, and the classifier may classify the unrecognized cell ID images into one of a plurality of clusters. The classifier may include an input layer, at least one hidden layer, and an output layer.

The clustering device 30 may be implemented using one or a combination of two or more of various known deep learning techniques. The clustering device 30 is not limited by the content described in this specification. The present invention may classify the unrecognized cell ID images into a plurality of clusters and perform learning through deep learning to classify the unrecognized cell ID images into one of the plurality of clusters, thereby improving the cluster classification accuracy of the unrecognized cell ID images.

In FIG. 1, the clustering device 30 is configured to be included in the manufacturing process system 1 and is illustrated as providing learning data through the communication bus 40, but the invention is not limited thereto. The clustering device 30 is implemented as a separate configuration from the manufacturing process system 1 and may transmit learning data to the manufacturing process system 1 through a network.

As illustrated in FIG. 1, the electronic control device 10_2 applied to the lamination process includes a barcode reader 210 and a client 220.

The barcode reader 210 may generate the cell ID image by reading the battery cell ID ID_2 formed through the lamination process, and recognize the cell ID from the generated cell ID image. When the barcode reader 210 fails to recognize the cell ID from the generated cell ID image, the barcode reader 210 may designate the corresponding cell ID image as the unrecognized cell ID image and transmit the designated cell ID image to the client 220. The cell ID normally recognized by the barcode reader 210 may also be transmitted to the client 220. When the cell ID for the unrecognized cell ID image is not recovered by the EDC server 20 and the cell ID recovery unit 120, the barcode reader 210 may reread the cell ID of the corresponding cell to generate the cell ID image.

The client 220 may transmit the recognized cell ID and the unrecognized cell ID image to the EDC server 20.

As illustrated in FIG. 1, the electronic control device 10_3 applied to the stacking process includes two barcode readers 310 and 320, a client 330, and a stack cell management unit 340.

The barcode reader 310 may generate the cell ID image by reading the battery cell ID ID_3 representing the stacked battery cell formed through the stacking process, and recognize the cell ID ID_3 from the generated cell ID image. When the barcode reader 310 fails to recognize the cell ID from the generated cell ID image, the barcode reader 110 may regenerate the cell ID image. The barcode reader 310 may recognize the cell ID from the regenerated cell ID image. The barcode reader 310 may transmit the recognized cell ID and the unrecognized cell ID image to the client 330.

The barcode reader 320 may generate the stack cell ID image by reading the stack cell ID for the stacked battery cell. As described above, the stack cell ID may be printed on the full-circumferential tape surrounding the outside of the stacked battery cell. The barcode reader 320 may recognize the stack cell ID from the stack cell ID image and transmit the recognized stack cell ID to the client 330 and the stack cell management unit 340.

The client 330 may transmit the recognized cell ID, the unrecognized cell ID image, and the stack cell ID to the EDC server 20. In this case, the unrecognized cell ID image may be one of the initially generated cell ID image, the regenerated cell ID image, or both images.

The stack cell management unit 340 may receive the cell ID representing the stacked battery cell from any one of the barcode reader 310 and the client 330, match the stack cell ID received from the barcode reader 320 with the representative cell ID, and store the matching results.

As illustrated in FIG. 1, the electronic control device 10_4 applied to the stacking process includes a barcode reader 410 and a client 420.

The barcode reader 410 may generate the pack ID image by reading a pack ID ID_4 printed on the outside of the battery pack formed through the packaging process, and recognize the pack ID ID_4 from the generated pack ID image. When the barcode reader 410 fails to recognize the pack ID from the generated pack ID image, the barcode reader 410 may regenerate the pack ID image. The barcode reader 410 may recognize the pack ID ID_5 from the regenerated pack ID image. The barcode reader 410 may transmit the recognized pack ID and the unrecognized pack ID image to the client 420.

The client 420 may transmit the recognized pack ID and the unrecognized pack ID image to the EDC server 20. In this case, the unrecognized pack ID image may be one of the initially generated pack ID image, the regenerated pack ID image, or both images. The client 420 may match the pack ID with the cell IDs of the plurality of stacked battery cells constituting the battery pack and transmit the matching result to the EDC server 20.

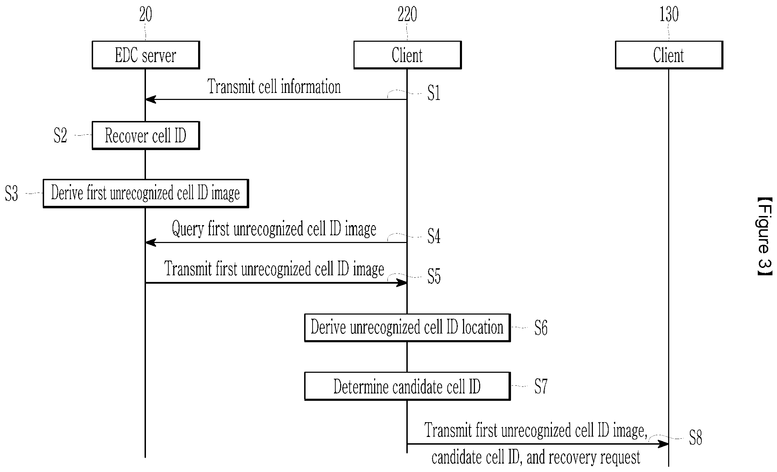

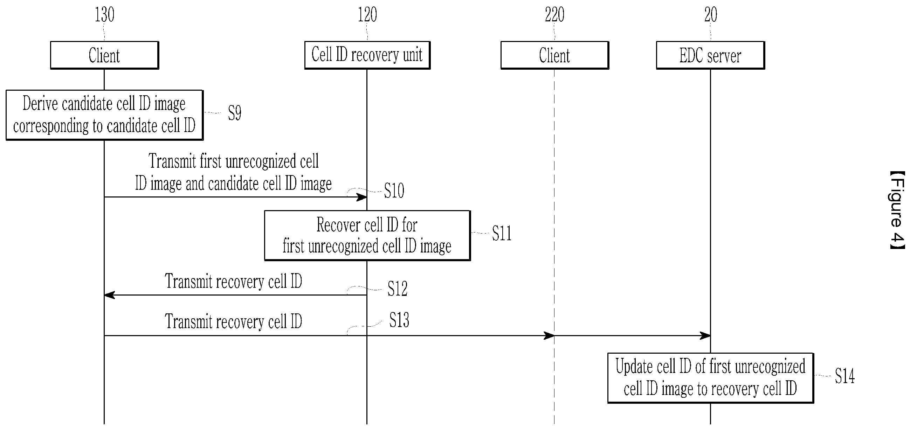

FIGS. 3 and 4 are flowcharts illustrating a cell ID recovery method according to an embodiment.

FIGS. 3 and 4 illustrate a method of recovering a cell ID for an unrecognized image generated during a lamination process.

First, the cell ID of the cell for which the lamination process has been completed is recognized by the barcode reader 210. The client 220 transmits the plurality of cell IDs recognized by the barcode reader 210 and the plurality of unrecognized cell ID images that fail to be recognized to the EDC server 20 according to the recognition order (S1). The information that the client 220 transmits to the EDC server 20 is collectively referred to as cell information.

The EDC server 20 may perform the cell ID recovery for the plurality of unrecognized cell ID images according to predetermined rules (S2). The predetermined rules may follow the method of assigning a cell ID as described above. When one of consecutive cell IDs is unrecognized, the EDC server 20 may use the cell ID of the immediately preceding location adjacent to the unrecognized cell ID image and the cell ID of the immediately following location to recover the unrecognized cell ID images.

An example of the recovery operation of the EDC server 20 is as follows. When, among cell IDs at consecutive locations, the cell ID at the location immediately before the unrecognized cell ID is "ABC1234" and the cell ID at the location immediately after the unrecognized cell ID is "ABC1236", the EDC server 20 may recover the cell ID of the unrecognized cell ID image to "ABC1235". However, when there are two or more unrecognized cell IDs among the consecutive cell IDs, the EDC server 20 may not perform recovery.

The EDC server 20 may derive a first unrecognized cell ID image that may not be recovered among the plurality of unrecognized cell ID images received from the client 220 (S3).

The client 220 may query the first unrecognized cell ID image from the EDC server 20 at every set cycle (S4). For example, the client 220 may request the transmission of the derived first unrecognized cell ID image to the EDC server 20.

The EDC server 20 may transmit the first unrecognized cell ID image to the client 220 in response to a request from the client 220 (S5).

The client 220 may derive the location of the first unrecognized cell ID image (hereinafter, unrecognized cell ID location) (S6).

The client 220 may determine a predetermined number of candidate cell IDs among the plurality of cell IDs based on the unrecognized cell ID location (S7). The client 220 may determine a predetermined number of cell IDs in a front location and cell IDs in a back location as candidate cell IDs based on the unrecognized cell ID location.

The client 220 may transmit the first unrecognized cell ID image, a request for recovery thereof, and a candidate cell ID to the client 130 of the electronic control device 10_1 of the notching process, which is the unit manufacturing process, prior to the lamination process (S8).

The client 130 may derive the cell ID image from the notching process corresponding to the candidate cell ID (S9). Hereinafter, the cell ID image from the previous step corresponding to the candidate cell ID is referred to as the candidate cell ID image. In one embodiment, the "previous step" may mean the notching process step which is the previous unit manufacturing process of the lamination process.

The client 130 transmits the first unrecognized cell ID image and the candidate cell ID image to the cell ID recovery unit 120 (S10).

The cell ID recovery unit 120 may calculate the similarity between the candidate cell ID images and the first unrecognized cell ID image, derive the candidate cell ID image with the highest similarity between the entire candidate cell ID images and the first unrecognized cell ID image, and recover the cell ID corresponding to the derived candidate cell ID image to the cell ID for the first unrecognized cell ID image (S11).

The cell ID recovery unit 120 transmits the recovered cell ID (hereinafter, recovered cell ID) to the client 130 (S12).

The client 130 may transmit the recovered cell ID to the client 220 and the EDC server 20 (S13). Alternatively, the client 130 may transmit the recovered cell ID to the client 220, and the client 220 may transmit the recovered cell ID to the EDC server 20.

The EDC server 20 may update the cell ID for the first unrecognized cell ID image to the received recovered cell ID.

FIGS. 3 and 4 illustrate a method for recovering an unrecognized cell ID image generated in a lamination process, but the present invention is not limited thereto. The cell ID recovery may be performed in the same way for unrecognized cell ID images generated in the stacking process. For example, the client 330 may determine the candidate cell ID by deriving the location of the unrecognized cell ID generated in the stacking process, and transmit the recovery request to the client 130 along with the unrecognized cell ID image and the candidate cell ID. However, the cell ID in the stacking process is different from the cell ID in the lamination process and the notching process. In this case, the candidate cell ID in the stacking process is the cell ID for the stack, so the client 330 may derive the candidate cell ID image corresponding to the candidate cell ID and transmit the derived candidate cell ID image to the client 130 along with the unrecognized cell ID image. The cell ID recovery unit 120 may calculate the similarity between the candidate cell ID images and the unrecognized cell ID image to derive the candidate cell ID image most similar to the unrecognized cell ID image among the entire candidate cell ID images, and recover the cell ID corresponding to the derived candidate cell ID image to the cell ID for the unrecognized cell ID image. The cell ID recovery unit 120 may transmit the recovered cell ID to the client 130, and the client 130 may transmit the recovered cell ID to the client 330 and the EDC server 20 (S13). Alternatively, the client 130 may transmit the recovered cell ID to the client 330, and the client 330 may transmit the recovered cell ID to the EDC server 20. The EDC server 20 may update the cell ID for the unrecognized cell ID image to the received recovered cell ID.

## Claims

1. A manufacturing process system (1) configured to control a plurality of unit manufacturing processes for assembling a plurality of battery cells, the manufacturing process system (1) comprising:
a plurality of electronic control devices (10_1-10_4) that are configured to control the plurality of unit manufacturing processes; and
an equipment data collection, EDC, server (20) that is configured to receive and store a plurality of normally recognized cell ID images and a plurality of unrecognized cell ID images from the plurality of electronic control devices (10_1-10_4);
wherein, among the plurality of electronic control devices (10_1-10_4), a first electronic control device is configured to control a first unit manufacturing process, derive a first cell ID location corresponding to a first unrecognized cell ID image among the plurality of unrecognized cell ID images, and determine a predetermined number of candidate cell IDs based on the first cell ID location,
wherein, among the plurality of electronic control devices (10_1-10_4), a second electronic control device is configured to control a second unit manufacturing process carried out before the first unit manufacturing process and determine candidate cell ID images based on the first cell ID location, the candidate cell ID images being cell ID images recognized in the second unit manufacturing process corresponding to the candidate cell IDs,
wherein the second electronic control device includes a cell ID recovery unit (120) that is configured to
derive, among the plurality of candidate cell ID images, a candidate cell ID image most similar to the first unrecognized cell ID image, by calculating a similarity between the candidate cell ID images and the first unrecognized cell ID image to derive a candidate cell ID image most similar to the first unrecognized cell ID image among the candidate cell ID images,
determine the cell ID corresponding to the derived candidate cell ID image as the cell ID for the first unrecognized cell ID image, and
recover a cell ID corresponding to the derived candidate cell ID image to a cell ID for the first unrecognized cell ID image.

2. The manufacturing process system (1) of claim 1, wherein the EDC server (20) is configured to:
perform cell ID recovery on the plurality of unrecognized cell ID images according to a predetermined rule according to a method of assigning the cell ID,
wherein the first unrecognized cell ID image is an unrecognized cell ID image that fails to be recovered by the EDC server (20).

3. The manufacturing process system (1) of claim 1 or 2, wherein the cell ID recovery unit (120) is further configured to:
learn a method of calculating the similarity between the plurality of unrecognized cell ID images and a plurality of normal cell ID images through deep learning.

4. The manufacturing process system (1) of claim 3, wherein:
the plurality of unrecognized cell ID images for learning by the cell ID recovery unit (120) are clustered according to a cause of non-recognition.

5. The manufacturing process system (1) of claim 4, further comprising:
a clustering device (30) that is configured to classify the plurality of unrecognized cell ID images and perform learning to determine a cluster to which each unrecognized cell ID image corresponds among the plurality of clusters.

6. The manufacturing process system (1) of any one of the preceding claims, wherein:
the first electronic control device includes:
a barcode reader (210) that is configured to read the plurality of cell IDs that have undergone the first unit manufacturing process; and
a first client that is configured to transmit a cell ID normally recognized by the barcode reader (210) and an unrecognized cell ID image to the EDC server (20).

7. The manufacturing process system (1) of claim 6, wherein:
the first client is configured to, when the first unrecognized cell ID image occurs in the first unit manufacturing process, derive a first cell ID location of the first unrecognized cell ID image and determine a predetermined number of candidate cell IDs based on the first cell ID location.

8. The manufacturing process system (1) of claim 7, wherein:
the second electronic control device includes:
a second client configured to determine cell ID images corresponding to the candidate cell IDs among the plurality of cell IDs recognized in the second unit manufacturing process as the candidate cell ID images.

9. The manufacturing process system (1) of any one of the preceding claims, wherein:
the cell ID recovery unit (120) is configured to, when the first unrecognized cell ID occurs during a lamination process among the plurality of unit manufacturing processes, derive, among the candidate cell ID images recognized in a notching process, which is a step before the lamination process, the candidate cell ID image most similar to the first unrecognized cell ID image.

10. The manufacturing process system (1) of any one of the preceding claims, wherein:
the cell ID recovery unit (120) is configured to, when the cell ID recovery for the first unrecognized cell ID image fails, perform rereading on the first unrecognized cell ID image.

11. A cell ID recovery method, comprising:
deriving (S5), by a first electronic control device controlling a first unit manufacturing process among a plurality of unit manufacturing processes, an unrecognized cell ID location which is a first unrecognized cell ID image location;
determining (S7), by the first electronic control device, a predetermined number of candidate cell IDs based on the unrecognized cell ID location;
determining (S9), by a second electronic control device controlling a second unit manufacturing process carried out before the first unit manufacturing process, candidate cell ID images recognized in the second unit manufacturing process corresponding to the candidate cell IDs;
calculating (S11), by the second electronic control device, a similarity between the candidate cell ID images and the first unrecognized cell ID image to derive a candidate cell ID image most similar to the first unrecognized cell ID image among the candidate cell ID images; and
recovering (S11), by the second electronic control device, a cell ID corresponding to the derived candidate cell ID image to a cell ID for the first unrecognized cell ID image.

12. The cell ID recovery method of claim 11, further comprising:
transmitting (S1), by the first electronic control device, a plurality of unrecognized cell ID images, which fail to be recognized, to an EDC server (20);
performing (S2), by the EDC server (20), cell ID recovery on the plurality of unrecognized cell ID images according to a predetermined rule; and
deriving (S3), by the EDC server (20), the first unrecognized cell ID image that has not been recovered as a result of performing the recovery.

13. The cell ID recovery method of claim 11 or 12, wherein:
the step of determining (S7), by the first electronic control device, the candidate cell ID includes
determining a predetermined number of cell IDs in a front location and cell IDs in a back location as candidate cell IDs based on the unrecognized cell ID location.

14. The cell ID recovery method of any one of claims 11 to 13, further comprising:
transmitting (S12) the recovered cell ID to the first electronic control device.

15. The cell ID recovery method of any one of claims 11 to 14, wherein:
the first unit manufacturing process is a lamination process, and the second unit manufacturing process is a notching process.

16. The cell ID recovery method of any one of claims 11 to 15, further comprising:
when the cell ID recovery for the first unrecognized cell ID image fails, performing rereading on the first unrecognized cell ID image.

## Patentansprüche

1. Herstellungsprozesssystem (1), das so konfiguriert ist, dass es eine Mehrzahl von Einheitsherstellungsprozessen zum Zusammenbau einer Mehrzahl von Batteriezellen steuert, wobei das Herstellungsprozesssystem (1) umfasst:
eine Mehrzahl von elektronischen Steuergeräten (10_1-10_4), die so konfiguriert sind, dass sie die Mehrzahl von Einheitsherstellungsprozessen steuern; und
einen Equipment Data Collection (EDC)-Server (20), der so konfiguriert ist, dass er eine Mehrzahl von normal erkannten Cell-ID-Bildern und eine Mehrzahl von nicht erkannten Cell-ID-Bildern von der Mehrzahl von elektronischen Steuergeräten (10_1-10_4) empfängt und speichert;
wobei aus der Mehrzahl von elektronischen Steuergeräten (10_1-10_4) ein erstes elektronisches Steuergerät so konfiguriert ist, dass es einen ersten Einheitsherstellungsprozess steuert, eine erste Cell-ID-Position ableitet, die einem ersten nicht erkannten Cell-ID-Bild aus der Mehrzahl von nicht erkannten Cell-ID-Bildern entspricht, und basierend auf der ersten Cell-ID-Position eine vorbestimmte Anzahl von Kandidaten-Cell-IDs bestimmt;
wobei aus der Mehrzahl von elektronischen Steuergeräten (10_1-10_4) ein zweites elektronisches Steuergerät so konfiguriert ist, dass es einen zweiten Einheitsherstellungsprozess steuert, der vor dem ersten Einheitsherstellungsprozess durchgeführt wird, und basierend auf der ersten Cell-ID-Position Kandidaten-Cell-ID-Bilder bestimmt, wobei die Kandidaten-Cell-ID-Bilder Cell-ID-Bilder sind, die in dem zweiten Einheitsherstellungsprozess erkannt wurden und den Kandidaten-Cell-IDs entsprechen;
wobei das zweite elektronische Steuergerät eine Cell-ID-Wiederherstellungseinheit (120) beinhaltet, die so konfiguriert ist, dass sie aus der Mehrzahl von Kandidaten-Cell-ID-Bildern ein Kandidaten-Cell-ID-Bild ableitet, das dem ersten nicht erkannten Cell-ID-Bild am ähnlichsten ist, indem eine Ähnlichkeit zwischen den Kandidaten-Cell-ID-Bildern und dem ersten nicht erkannten Cell-ID-Bild berechnet wird, um aus den Kandidaten-Cell-ID-Bildern ein Kandidaten-Cell-ID-Bild abzuleiten, das dem ersten nicht erkannten Cell-ID-Bild am ähnlichsten ist,
die Cell-ID, die dem abgeleiteten Kandidaten-Cell-ID-Bild entspricht, als Cell-ID für das erste nicht erkannte Cell-ID-Bild bestimmt, und
eine Cell-ID, die dem abgeleiteten Kandidaten-Cell-ID-Bild entspricht, als Cell-ID für das erste nicht erkannte Cell-ID-Bild wiederherstellt.

2. Herstellungsprozesssystem (1) nach Anspruch 1, wobei der EDC-Server (20) so konfiguriert ist, dass er:
eine Cell-ID-Wiederherstellung für die Mehrzahl von nicht erkannten Cell-ID-Bildern gemäß einer vorbestimmten Regel entsprechend einem Verfahren zur Zuordnung der Cell-ID durchführt,
wobei das erste nicht erkannte Cell-ID-Bild ein nicht erkanntes Cell-ID-Bild ist, dessen Wiederherstellung durch den EDC-Server (20) fehlschlägt.

3. Herstellungsprozesssystem (1) nach Anspruch 1 oder 2, wobei die Cell-ID-Wiederherstellungseinheit (120) weiterhin so konfiguriert ist, dass sie:
ein Verfahren zur Berechnung der Ähnlichkeit zwischen der Mehrzahl von nicht erkannten Cell-ID-Bildern und einer Mehrzahl von normalen Cell-ID-Bildern mittels Deep Learning erlernt.

4. Herstellungsprozesssystem (1) nach Anspruch 3, wobei:
die Mehrzahl von nicht erkannten Cell-ID-Bildern zum Lernen durch die Cell-ID-Wiederherstellungseinheit (120) entsprechend einer Ursache der Nichterkennung geclustert sind.

5. Herstellungsprozesssystem (1) nach Anspruch 4, weiterhin umfassend:
eine Clustering-Vorrichtung (30), die so konfiguriert ist, dass sie die Mehrzahl von nicht erkannten Cell-ID-Bildern klassifiziert und ein Lernen durchführt, um einen Cluster zu bestimmen, dem jedes nicht erkannte Cell-ID-Bild aus der Mehrzahl von Clustern entspricht.

6. Herstellungsprozesssystem (1) nach einem der vorangehenden Ansprüche, wobei:
das erste elektronische Steuergerät umfasst:
einen Barcode-Leser (210), der so konfiguriert ist, dass er die Mehrzahl von Cell-IDs liest, die den ersten Einheitsherstellungsprozess durchlaufen haben; und
einen ersten Client, der so konfiguriert ist, dass er eine durch den Barcode-Leser (210) normal erkannte Cell-ID und ein nicht erkanntes Cell-ID-Bild an den EDC-Server (20) übermittelt.

7. Herstellungsprozesssystem (1) nach Anspruch 6, wobei:
der erste Client so konfiguriert ist, dass er, wenn das erste nicht erkannte Cell-ID-Bild in dem ersten Einheitsherstellungsprozess auftritt, eine erste Cell-ID-Position des ersten nicht erkannten Cell-ID-Bildes ableitet und basierend auf der ersten Cell-ID-Position eine vorbestimmte Anzahl von Kandidaten-Cell-IDs bestimmt.

8. Herstellungsprozesssystem (1) nach Anspruch 7, wobei:
das zweite elektronische Steuergerät umfasst:
einen zweiten Client, der so konfiguriert ist, dass er aus der Mehrzahl von Cell-IDs, die in dem zweiten Einheitsherstellungsprozess erkannt wurden, Cell-ID-Bilder, die den Kandidaten-Cell-IDs entsprechen, als Kandidaten-Cell-ID-Bilder bestimmt.

9. Herstellungsprozesssystem (1) nach einem der vorangehenden Ansprüche, wobei:
die Cell-ID-Wiederherstellungseinheit (120) so konfiguriert ist, dass sie, wenn die erste nicht erkannte Cell-ID während eines Laminierungsprozesses aus der Mehrzahl von Einheitsherstellungsprozessen auftritt, aus den in einem Notching-Prozess, der ein dem Laminierungsprozess vorangehender Schritt ist, erkannten Kandidaten-Cell-ID-Bildern das Kandidaten-Cell-ID-Bild ableitet, das dem ersten nicht erkannten Cell-ID-Bild am ähnlichsten ist.

10. Herstellungsprozesssystem (1) nach einem der vorangehenden Ansprüche, wobei:
die Cell-ID-Wiederherstellungseinheit (120) so konfiguriert ist, dass sie, wenn die Cell-ID-Wiederherstellung für das erste nicht erkannte Cell-ID-Bild fehlschlägt, ein erneutes Auslesen des ersten nicht erkannten Cell-ID-Bilds durchführt.

11. Verfahren zur Wiederherstellung einer Cell-ID, umfassend:
Ableiten (S5) einer nicht erkannten Cell-ID-Position, die eine Position eines ersten nicht erkannten Cell-ID-Bildes ist, durch ein erstes elektronisches Steuergerät, das einen ersten Einheitsherstellungsprozess aus einer Mehrzahl von Einheitsherstellungsprozessen steuert;
Bestimmen (S7) einer vorbestimmten Anzahl von Kandidaten-Cell-IDs basierend auf der nicht erkannten Cell-ID-Position durch das erste elektronische Steuergerät;
Bestimmen (S9) von Kandidaten-Cell-ID-Bildern, die in dem zweiten Einheitsherstellungsprozess erkannt wurden und den Kandidaten-Cell-IDs entsprechen, durch ein zweites elektronisches Steuergerät, das einen zweiten Einheitsherstellungsprozess steuert, der vor dem ersten Einheitsherstellungsprozess durchgeführt wurde,
Berechnen (S11) einer Ähnlichkeit zwischen den Kandidaten-Cell-ID-Bildern und dem ersten nicht erkannten Cell-ID-Bild durch das zweite elektronische Steuergerät, um aus den Kandidaten-Cell-ID-Bildern ein Kandidaten-Cell-ID-Bild abzuleiten, das dem ersten nicht erkannten Cell-ID-Bild am ähnlichsten ist; und
Wiederherstellen (S11) einer Cell-ID, die dem abgeleiteten Kandidaten-Cell-ID-Bild entspricht, als Cell-ID für das erste nicht erkannte Cell-ID-Bild durch das zweite elektronische Steuergerät.

12. Verfahren zur Cell-ID-Wiederherstellung nach Anspruch 11, weiterhin umfassend:
Übermitteln (S1) einer Mehrzahl von nicht erkannten Cell-ID-Bildern, deren Erkennung fehlschlägt, an einen EDC-Server (20) durch das erste elektronische Steuergerät;
Durchführen (S2) einer Cell-ID-Wiederherstellung für die Mehrzahl von nicht erkannten Cell-ID-Bildern gemäß einer vorbestimmten Regel durch den EDC-Server (20); und
Ableiten (S3) des ersten nicht erkannten Cell-ID-Bildes, das infolge der Durchführung der Wiederherstellung nicht wiederhergestellt wurde, durch den EDC-Server (20).

13. Verfahren zur Cell-ID-Wiederherstellung nach Anspruch 11 oder 12, wobei:
der Schritt des Bestimmens (S7) der Kandidaten-Cell-ID durch das erste elektronische Steuergerät umfasst:
Bestimmen einer vorbestimmten Anzahl von Cell-IDs an einer vorderen Position und von Cell-IDs an einer hinteren Position als Kandidaten-Cell-IDs basierend auf der nicht erkannten Cell-ID-Position.

14. Verfahren zur Cell-ID-Wiederherstellung nach einem der Ansprüche 11 bis 13, weiterhin umfassend:
Übermitteln (S12) der wiederhergestellten Cell-ID an das erste elektronische Steuergerät.

15. Verfahren zur Cell-ID-Wiederherstellung nach einem der Ansprüche 11 bis 14, wobei:
der erste Einheitsherstellungsprozess ein Laminierungsprozess ist und der zweite Einheitsherstellungsprozess ein Notching-Prozess ist.

16. Verfahren zur Cell-ID-Wiederherstellung nach einem der Ansprüche 11 bis 15, weiterhin umfassend:
wenn die Cell-ID-Wiederherstellung für das erste nicht erkannte Cell-ID-Bild fehlschlägt, Durchführen eines erneutem Auslesens des ersten nicht erkannten Cell-ID-Bildes.

## Revendications

1. Système de processus de fabrication (1) configuré pour commander une pluralité de processus de fabrication d'unités afin d'assembler une pluralité de cellules de batterie, ledit système de processus de fabrication (1) comprenant :
une pluralité de dispositifs de commande électroniques (10_1-10_4) configurés pour commander la pluralité de processus de fabrication d'unités ; et
un serveur de collecte de données d'équipement, EDC (20), configuré pour recevoir et stocker une pluralité d'images d'identifiants de cellules normalement reconnues et une pluralité d'images d'identifiants de cellules non reconnues provenant de la pluralité de dispositifs de commande électroniques (10_1-10_4) ;
où, parmi la pluralité de dispositifs de commande électronique (10_1-10_4), un premier dispositif de commande électronique est configuré pour commander un premier processus de fabrication d'unités, déduire un premier emplacement d'identifiant de cellule correspondant à une première image d'identifiant de cellule non reconnue parmi la pluralité d'images d'identifiants de cellules non reconnues, et déterminer un nombre prédéterminé d'identifiants de cellules candidates sur la base du premier emplacement d'identifiant de cellule,
où, parmi la pluralité de dispositifs de commande électronique (10_1-10_4), un deuxième dispositif de commande électronique est configuré pour commander un deuxième processus de fabrication d'unités exécuté avant le premier processus de fabrication d'unités et déterminer des images d'identifiants de cellules candidates sur la base de l'emplacement du premier identifiant de cellule, les images d'identifiants de cellules candidates étant des images d'identifiants de cellules reconnues lors du deuxième processus de fabrication d'unités correspondant aux identifiants de cellules candidates,
où le deuxième dispositif de commande électronique comprend une unité de restauration d'identifiant de cellule (120) configurée pour
déduire, parmi la pluralité d'images d'identifiants de cellules candidates, une image d'identifiant de cellule candidate plus similaire à la première image d'identifiant de cellule non reconnue, par calcul d'une similarité entre les images d'identifiants de cellules candidates et la première image d'identifiant de cellule non reconnue afin de déduire une image d'identifiant de cellule candidate plus similaire à la première image d'identifiant de cellule non reconnue parmi les images d'identifiants de cellules candidates,
déterminer l'identifiant de cellule correspondant à l'image d'identifiant de cellule candidate déduite en tant qu'identifiant de cellule pour la première image d'identifiant de cellule non reconnue, et
restaurer un identifiant de cellule correspondant à l'image d'identifiant de cellule candidate déduite comme identifiant de cellule pour la première image d'identifiant de cellule non reconnue.

2. Système de procédé de fabrication (1) selon la revendication 1, où le serveur EDC (20) est configuré pour :
effectuer une restauration d'identifiant de cellule sur la pluralité d'images d'identifiants de cellules non reconnues conformément à une règle prédéterminée selon un procédé d'attribution de l'identifiant de cellule,
où la première image d'identifiant de cellule non reconnue est une image d'identifiant de cellule non reconnue ne pouvant pas être restaurée par le serveur EDC (20).

3. Système de procédé de fabrication (1) selon la revendication 1 ou la revendication 2, où l'unité de restauration d'identifiant de cellule (120) est en outre configurée pour :
apprendre un procédé de calcul de la similarité entre la pluralité d'images d'identifiants de cellules non reconnues et une pluralité d'images d'identifiants de cellules normales par apprentissage profond.

4. Système de procédé de fabrication (1) selon la revendication 3, où :
la pluralité d'images d'identifiants de cellules non reconnues pour l'apprentissage par l'unité de restauration d'identifiant de cellule (120) sont groupées suivant une cause de non-reconnaissance.

5. Système de procédé de fabrication (1) selon la revendication 4, comprenant en outre : un dispositif de groupement (30) configuré pour classer la pluralité d'images d'identifiants de cellules non reconnues et effectuer un apprentissage afin de déterminer un groupe auquel chaque image d'identifiant de cellule non reconnue correspond parmi la pluralité de groupes.

6. Système de procédé de fabrication (1) selon l'une des revendications précédentes, où : le premier dispositif de commande électronique comprend :
un lecteur de code à barres (210) configuré pour lire la pluralité d'identifiants de cellules ayant été soumises au premier processus de fabrication d'unités ; et
un premier client configuré pour transmettre au serveur EDC (20) un identifiant de cellule normalement reconnue par le lecteur de code à barres (210) et une image d'identifiant de cellule non reconnue.

7. Système de procédé de fabrication (1) selon la revendication 6, où :
lorsque la première image d'identifiant de cellule non reconnue apparaît lors du premier processus de fabrication d'unités, le premier client est configuré pour déduire un premier emplacement d'identifiant de cellule de la première image d'identifiant de cellule non reconnue et déterminer un nombre prédéterminé d'identifiants de cellules candidates sur la base du premier emplacement d'identifiant de cellule.

8. Système de procédé de fabrication (1) selon la revendication 7, où :
le deuxième dispositif de commande électronique comprend :
un deuxième client configuré pour déterminer en tant qu'images d'identifiants de cellules candidates des images d'identifiants de cellules correspondant aux identifiants de cellules candidates parmi la pluralité d'identifiants de cellules reconnues lors du processus de fabrication de deuxième unité.

9. Système de procédé de fabrication (1) selon l'une des revendications précédentes, où : lorsque le premier identifiant de cellule non reconnue apparaît pendant un processus de stratification parmi la pluralité de processus de fabrication d'unités, l'unité de restauration d'identifiant de cellule (120) est configurée pour déduire, parmi les images d'identifiants de cellules candidates reconnues lors d'un processus d'encochage, lequel est une étape précédant le processus de stratification, l'image d'identifiant de cellule candidate la plus similaire à la première image d'identifiant de cellule non reconnue.

10. Système de procédé de fabrication (1) selon l'une des revendications précédentes, où : lorsque la restauration d'identifiant de cellule pour la première image d'identifiant de cellule non reconnue échoue, l'unité de restauration d'identifiant de cellule (120) est configurée pour effectuer une relecture sur la première image d'identifiant de cellule non reconnue.

11. Procédé de restauration d'identifiant de cellule, comprenant :
la déduction (S5), par un premier dispositif de commande électronique commandant un premier processus de fabrication d'unités parmi une pluralité de processus de fabrication d'unités, d'un emplacement d'identifiant de cellule non reconnue, lequel est un premier emplacement d'identifiant de cellule non reconnue ;
la détermination (S7), par le premier dispositif de commande électronique, d'un nombre prédéterminé d'identifiants de cellules candidates sur la base de l'emplacement d'identifiant de cellule non reconnue ;
la détermination (S9), par un deuxième dispositif de commande électronique commandant un deuxième processus de fabrication d'unités exécuté avant le premier processus de fabrication d'unité, d'images d'identifiants de cellules candidates reconnues lors du deuxième processus de fabrication d'unités correspondant aux identifications de cellules candidates ;
le calcul (S11), par le deuxième dispositif de commande électronique, d'une similarité entre les images d'identifiants de cellules candidates et la première image d'identifiant de cellule non reconnue afin de déduire une image d'identifiant de cellule candidate plus similaire à la première image d'identifiant de cellule non reconnue parmi les images d'identifiants de cellules candidates ; et
la restauration (S11), par le deuxième dispositif de commande électronique, d'un identifiant de cellule correspondant à l'image d'identifiant de cellule candidate déduite comme identifiant de cellule pour la première image d'identifiant de cellule non reconnue.

12. Procédé de restauration d'identifiant de cellule selon la revendication 11, comprenant en outre :
la transmission (S1), par le premier dispositif de commande électronique, d'une pluralité d'images d'identifiants de cellules non reconnues, lesquelles n'ont pas pu être reconnues, à un serveur EDC (20) ;
l'exécution (S2), par le serveur EDC (20), d'une restauration d'identifiant de cellule sur la pluralité d'images d'identifiants de cellules non reconnues conformément à une règle prédéterminée ; et
la déduction (S3), par le serveur EDC (20), de la première image d'identifiant de cellule non reconnue n'ayant pas été restaurée en tant que résultat d'exécution de la restauration.

13. Procédé de restauration d'identifiant de cellule selon la revendication 11 ou la revendication 12, où :
l'étape de détermination (S7) de l'identifiant de cellule candidate par le premier dispositif de commande électronique comprend
la détermination d'un nombre prédéterminé d'identifiants de cellules dans un emplacement avant et d'identifiants de cellule dans un emplacement arrière en tant qu'identifiants de cellules candidates sur la base de l'emplacement d'identifiant de cellule non reconnue.

14. Procédé de restauration d'identifiant de cellule selon l'une des revendications 11 à 13, comprenant en outre :
la transmission (S12) de l'identifiant de cellule restauré au premier dispositif de commande électronique.

15. Procédé de restauration d'identifiant de cellule selon l'une des revendications 11 à 14, où :
le premier processus de fabrication d'unités est un processus de stratification, et le deuxième processus de fabrication d'unités est un processus d'encochage.

16. Procédé de restauration d'identifiant de cellule selon l'une des revendications 11 à *15,* comprenant en outre :
lorsque la restauration d'identifiant de cellule pour la première image d'identifiant de cellule non reconnue échoue, l'exécution d'une relecture sur la première image d'identifiant de cellule non reconnue.
